# EUROPÄISCHE PATENTSCHRIFT

(11) **EP 3 983 163 B1**
(45) Veröffentlichungstag und Bekanntmachung des Hinweises auf die Patenterteilung: **22.01.2025**
(21) Anmeldenummer: 20730617.6
(22) Anmeldetag: 04.06.2020
(51) Int. Cl.: B23F 1/04, B23F 5/16

(54) **VERFAHREN ZUM WÄLZSTOSSEN EINER PERIODISCHEN STRUKTUR, INSBESONDERE EINER VERZAHNUNG UND DAZU AUSGELEGTE STOSSMASCHINE**
METHOD FOR GEAR SHAPING A PERIODIC STRUCTURE, IN PARTICULAR A TOOTHING, AND SHAPING MACHINE DESIGNED THEREFOR
PROCÉDÉ POUR TAILLER UNE STRUCTURE PÉRIODIQUE, EN PARTICULIER UNE DENTURE, PAR MORTAISAGE ET MACHINE CONÇUE POUR METTRE EN OEUVRE LE PROCÉDÉ

(30) Priorität: 17.06.2019 DE 102019004299
(43) Veröffentlichungstag der Anmeldung: 20.04.2022
(73) Patentinhaber: GLEASON-PFAUTER MASCHINENFABRIK GMBH, 71636 Ludwigsburg (DE)
(72) Erfinder: KLEINBACH, Kurt, 71717 Beilstein (DE)
(74) Vertreter: Leinweber & Zimmermann
(86) Internationale Anmeldenummer: PCT/EP2020/065428
(87) Internationale Veröffentlichungsnummer: WO 2020/254114

(56) Entgegenhaltungen:
- EP-A1- 2 368 660
- DE-A1- 102012 016 515
- US-B2- 9 868 169
- LANGE J: "INNOVATIVE CNC GEAR SHAPING", GEAR TECHNOLOGY, RANDALL PUBLISHING CO. ELK GROVE, ILLINOIS, US, vol. 11, no. 1, 1 January 1994 (1994-01-01), pages 16 - 29, XP000425630, ISSN: 0743-6858

## Beschreibung

Die Erfindung betrifft ein Verfahren zum Wälzstoßen einer periodischen Struktur, insbesondere einer Verzahnung an einem Werkstück, bei dem das Werkstück kontinuierlich um seine Drehachse drehend in materialabnehmenden Bearbeitungseingriff mit einem verzahnten, sich in Wälzkopplung zur Werkstückdrehung um seine Drehachse drehenden Stoßwerkzeug gebracht wird, und das Stoßwerkzeug nach einem Arbeitshub von dem Werkstück in einer Abheberichtung abgehoben und nach anschließendem Rückhub in abgehobenem Zustand für den nächsten Arbeitshub wieder zum Werkstück rückgestellt wird, sowie eine dazu gesteuerte Wälzstoßmaschine.

Beim Wälzstoßen handelt es sich um eine seit langem bekannte Technik zur Herstellung von Verzahnungen. Es handelt sich um schneidendes Verfahren, bei dem die Hauptschnittbewegung durch lineare Oszillation des Werkzeugs realisiert ist. Nur im sogenannten Arbeitshub erfolgt die spanende Materialabnahme des Werkstückwerkstoffs, der Rückhub erfolgt zur Vermeidung von Rückhubstreifen in abgehobenem Zustand. Das Verfahrensprinzip des Wälzstoßens ist beispielsweise in Thomas Bausch et al, "Innovative Zahnradfertigung", 3. Auflage, S. 281 in Bild 7.1-1 dargestellt, auf das im Übrigen hinsichtlich dessen grundlegender Technologie Bezug genommen wird. So ist die Wälzkopplung einfach die für den Wälzeingriff aufeinander abgestimmte Drehbewegung von Werkzeug und Werkstück, im Falle der Bearbeitung von Schrägverzahnungen ist zur Aufrechterhaltung des wälzenden Bearbeitungseingriffs während einer Axialbewegung eine sogenannte Schraubenführung erforderlich, die jedoch ebenfalls elektronisch über eine an die Hubbewegung angepasste Zusatzdrehung des Werkzeugs CNC gesteuert realisierbar ist (elektronische Schraubenführung oder einfach elektronische Schräge). Im Sinne dieser Anmeldung gehört die für die Bearbeitung von Schrägverzahnungen erforderliche Schraubenführung zur Wälzkopplung hinzu.

Ein wichtiger Vorteil des Wälzstoßens gegenüber anderen Verfahren wie etwa des Wälzfräsens liegt in der universelleren Einsetzbarkeit auch für bestimmte Werkstückgeometrien wie Innenverzahnungen oder für Werkstücke mit an die Verzahnung anschließenden Schultern, für die sich das Wälzfräsen wenig bis gar nicht eignet.

Die Abhebung des Werkzeugs zwischen Arbeitshub und Rückhub erfolgt üblicherweise nicht soweit, dass die Werkzeugzähne radial gänzlich aus den Zahnlücken des Werkzeugs herausfahren, jedoch mit einem ausreichend bemessenen radialen Abhebungsabstand zur Vermeidung von Kollisionen im Rückhub (Rückhubstreifen).

Die Abheberichtung entspricht bei typischen Wälzstoßmaschinen der Richtung einer über beispielsweise einen Abhebenocken bewirkten Abhebung und stimmt üblicherweise auch mit der radialen Zustellachse der Maschine überein. Bei hinsichtlich der Kollisionsgefahr kritischen Verzahnungen, speziell Innenverzahnungen, kann die effektive Abheberichtung (entsprechend einem Abhebewinkel in einer zur Hubrichtung orthogonalen Ebene) auch verändert werden, indem beim Abheben eine durch einen Ständerseitenversatz oder rotatorisch bewirkte tangentiale Abhebekomponente der radialen Maschinenachsabhebung zur Bildung eines neuen Abhebevektors (Abheberichtung) erzeugt wird, so dass die Werkzeugbahn im Rückhub unter eingestelltem Tangentialversatz erfolgt. Dies ist in EP 2 368 660 A1 offenbart, die ein Verfahren gemäß dem Oberbegriff des Anspruchs 1 offenbart.

US 2010/0290852 A1, betreffend ebenfalls das Wälzstoßen, macht die kontinuierliche Werkzeugspindeldrehung für ein Interferenzproblem mit dem Werkstück verantwortlich und schlägt eine diskontinuierliche (timed stepped) Werkzeugdrehung vor.

Der Erfindung liegt die Aufgabe zugrunde, ein Verfahren der eingangs genannten Art weitergehend zu verbessern, insbesondere hinsichtlich einer Eingliederung einer kollisionsfreien Werkzeugbahn in das Gesamtkonzept des Verfahrens.

Diese Aufgabe wird in verfahrenstechnischer Hinsicht durch eine Weiterbildung des Verfahrens der eingangs genannten Art gelöst, die im Wesentlichen dadurch gekennzeichnet ist, dass man der Wälzkopplung im Rückhub eine quer zur Abheberichtung verlaufende Ausweichbewegung des Stoßwerkzeugs weg von der einlaufenden Flanke des Werkstücks überlagert. Erfindungsgemäß wird somit die Rückhubbewegung des Stoßwerkzeugs modifiziert, wobei insbesondere die Erkenntnis ausgenutzt wird, dass die größte Kollisionsgefahr im Bereich des Übergangs am Ende des Rückhubs auftritt, wo noch ungeschnittenes Material in relativ gesehen maximalem Aufmaß vorliegt. Die Ausweichbewegung, die hinsichtlich der anderen gegenüberliegenden Flanke zwangsläufig eine Annäherungsbewegung ist, erfolgt somit passend zum Rückhub mit weniger störendem Einfluss der anderen Flanke der von einem Stoßradzahn im Arbeitshub durchstoßenen Zahnlücke.

In einer bevorzugten Ausgestaltung ist vorgesehen, dass die Ausweichbewegung durch eine Zusatzdrehung des Stoßwerkzeugs bewirkt wird. Damit kann auf etwaige gesondert vorgesehene zusätzliche Maschinenachsen verzichtet werden und auch die Werkstückdrehung unverändert gelassen werden. In der Werkzeugdrehung vereinigen sich dann die überlagerte Wälzkopplung (ggf. einschließlich elektronischer Schräge beim Stoßen von Schrägverzahnungen) und die durch Zusatzdrehung erzeugte Ausweichbewegung. Bezüglich eines nur die Wälzkopplung mit ggf. elektronischer Schräge drehenden Referenzsystems bewegt sich eine Werkzeugdrehlagenreferenz (beispielsweise der tiefste Punkt des arbeitenden Stoßradzahns) rotatorisch noch quer zur Hubrichtung und quer zur Abheberichtung.

In einer weiteren bevorzugten Verfahrensgestaltung wird die Ausweichbewegung über einen überwiegenden Teil des Rückhubs vorgenommen. Auf diese Weise wird die verfügbare Zeitspanne länger, und eine störende Annäherung an die Gegenflanke kann geeignet auf höhere Rückhubniveaus verschoben werden.

In diesem Zusammenhang wird besonders bevorzugt vorgesehen, dass man die Ausweichbewegung zu einem sich im Rückhub stetig aufbauenden Offset, insbesondere Drehwinkel-Offset gegenüber der Wälzkopplung steuert. Ein solcher Offset ist somit nicht etwa bereits bei Beginn des Rückhubs maximal vorhanden, sondern baut sich erst im Rückhub auf.

In diesem Zusammenhang ist besonders bevorzugt vorgesehen, dass der maximale Offset mehr am Ende als am Anfang des Rückhubs liegt, bevorzugt näher am Ende als in Hubmitte, insbesondere kann der maximale Offset am Ende des Rückhubs liegen, oder, je nach optionaler Phasenverschiebung zwischen der linearen Oszillation und der Abhebung, am Übergang, in welchem der tiefste Werkzeugpunkt des arbeitenden Stoßzahns sich axial in Hubrichtung gesehen gerade oberhalb der oberen Verzahnungskante befindet.

In einer weiteren bevorzugten Gestaltung des Verfahrens steuert man die Ausweichbewegung zu einem im Intervall [1/8; 8], bevorzugt im Intervall [1/5; 5], insbesondere im Intervall [1/3; 3] liegenden Verhältnis des engsten Abstands zwischen Werkstück und Stoßwerkzeug an der einlaufenden Flanke zu dem an der gegenüberliegenden Flanke. Mit einfachen Worten wird somit das Kollisionsrisiko zu beiden Flanken unter fortlaufender Symmetrisierung gehalten.

Ein weiterer Vorteil der durch das erfindungsgemäße Verfahren bereitgestellten Gestaltungsmöglichkeiten liegt in einer Verringerung des ansonsten erforderlichen Abhebebetrags der Abhebebewegung, insbesondere deren von einer Maschinenachse vorgegebenen Radialkomponente. So ist bevorzugt vorgesehen, dass der Abhebebetrag geringer eingestellt wird als eine erste Abhebereferenz, bei deren Einstellung das Stoßwerkzeug ohne die Ausweichbewegung außerhalb eines Sicherheitsabstands für Rückhubstreifen liegen würde. Als Sicherheitsmarge gilt hier der fachübliche Wert in der Größenordnung von 0,05. Auf diese Weise kann die Maschine schwingungsärmer gestaltet werden.

Zudem kann bevorzugt vorgesehen werden, dass die Abhebebewegung und die Ausweichbewegung aufeinander hinsichtlich einer Minimierung des Abhebebetrags abgestimmt werden. Dies kann beispielsweise durch Vorab-Simulation von kollisionsanzeigenden Durchdringungskurven der Bewegungen im Rückhub betrachtet werden und optimiert werden, insbesondere durch eine iterative Bestimmung. Hierzu werden die fachüblichen Sicherheitsmargen eingehalten.

Beispielsweise könnte man sich mit dem Abhebebetrag in einem Bereich bewegen, der größer ist als R2+p(R1-R2) und kleiner ist als R2+q(R1-R2), wobei R1 die erste Abhebereferenz und R2 eine zweite Abhebereferenz darstellt, bei der es trotz der Ausweichbewegung gerade zum Rückhubstreifen käme, und p ≥ 0,1, bevorzugt ≥ 0,2 ist, und q < 0,9, bevorzugt < 0,8, insbesondere < 0,7 ist.

Ein weiterer Vorteil des erfindungsgemäßen Verfahrens sind größere Gestaltungsmöglichkeiten durch die erfindungsgemäße Kollisionsrisiko-Reduzierung auch hinsichtlich der bei der Werkzeugbahn auftretenden Beschleunigungen. So ist bevorzugt vorgesehen, dass die Änderung der Abhebekomponente zur Axialkomponente der Werkzeugbahn krümmungsruckfrei erfolgt.

Durch elektronische CNC-Steuerung des Kurbelantriebs kann zur Verringerung der Gesamtzeit für einen Hubzyklus der Rückhub auch gegenüber dem Arbeitshub beschleunigt erfolgen, wobei die Wälzkopplung entsprechend für den beschleunigten Rückhub anzupassen ist.

Bevorzugt werden mehrere Hübe pro Teilung der Werkstückverzahnung ausgeführt, d.h. die Werkstückdrehung erfolgt vergleichsweise langsam gegenüber der Hubbewegung. Bevorzugt werden wenigstens vier, weiter bevorzugt wenigstens sechs, insbesondere wenigstens acht Hübe ausgeführt, bevor die Werkstückdrehung um insgesamt eine Teilung weiter gedreht wurde.

In einer weiteren bevorzugten Gestaltung erfolgt die Rückstellbewegung gegenüber der Abhebebewegung oder einer Minimalrückstellung verzögert, z.B. durch einen gegenüber dem erforderlichen oberen Überlauf erweiterten Überlauf. Somit verbleibt mehr Zeit für die zur Wiederherstellung vor dem nächsten Arbeitshub erforderliche Umkehrung der Ausweichbewegung, bzw. des Wiederabbaus des aufgebauten Offsets in der ohnehin schon durch das Durchlaufen des oberen Totpunkts hohen Beschleunigungen ausgesetzten Rückstellbewegung, so dass die richtigen Kopplungsbedingungen laufruhiger und mit zufriedenstellender Präzision erreicht werden.

Sofern bereits bei der Abhebebewegung Kollisionsgefahr droht, kann auch vorgesehen werden, beim Abheben die effektive Abheberichtung durch eine quer zur die Abhebung bewirkenden Maschinenachsrichtung verlaufende Überlagerungsbewegung und/oder eine außermittige Bearbeitung (Ständerseitenversatz) zu ändern, bevorzugt ebenfalls durch Werkzeugzusatzdrehung. In diesem Fall wird es jedoch bevorzugt, dass der überwiegende Anteil des insgesamt aufgebauten Offsets erst im Rückhub aufgebaut wird.

Grundsätzlich ist die Erfindung für diverse maschinenseitige Realisierungen der zyklischen Werkzeugbahn geeignet, bevorzugt kommt sie jedoch bei einer Variante zum Einsatz, beim der ein Abhebenocken bei einem Stoßkopf mit Kurbeltrieb herangezogen wird.

Von der Erfindung wird auch ein zur Ausführung des Verfahrens nach einem der vorgenannten Aspekte führendes Steuerprogramm gemäß Anspruch 15 unter Schutz gestellt, wie auch eine Wälzstoßmaschine gemäß Anspruch 16 mit einer diese zur Ausführung eines Verfahrens nach einem der vorgenannten Aspekte steuernden Steuereinrichtung. Die Vorteile der erfindungsgemäßen Maschine ergeben sich aus den Vorteilen des erfindungsgemäßen Verfahrens.

Als Stoßwerkzeuge wird bevorzugt ein Scheibenschneidrad herangezogen, je nach Werkstückkonfiguration können jedoch auch Glockenschneidräder, Schaftschneidräder oder Hohlglockenschneidräder verwendet werden.

Hinsichtlich der Zustellstrategie ist die Erfindung keinen besonderen Einschränkungen unterworfen, beispielsweise könnte eine radiale Zustellung mit Wälzvorschub gewählt werden, oder auch ein Spiralverfahren mit degressiver radialer Zustellung, oder andere Zustellarten. Maschinentechnisch wird die elektronische Schrägführung wie auch bevorzugt die Ausweichbewegung mittels eines CNC-gesteuerten Direktantriebs realisiert.

Weitere Merkmale, Einzelheiten und Vorteile der Erfindung ergeben sich aus der nachfolgenden Beschreibung mit Bezug auf die beigefügten Figuren, von denen
Fig. 1 eine Werkzeugbahn beim Wälzstoßen zeigt,
Fig. 2 schematisch ein Abhebenockenprofil zeigt,
Fig. 3 eine teilweise aufgerissene Schnittansicht eines Stoßkopfes mit Kurbelantrieb und Abhebenocken zeigt,
Fig. 4A eine Hublage als Funktion der Zeit zeigt,
Fig. 4B eine Drehlagenposition als Funktion der Zeit zeigt,
Fig. 4C einen Zusammenhang zwischen Drehposition und Hublage zeigt,
Fig. 5 eine stark überhöhte Darstellung einer Ausweichbewegung in einem Drehposition-Hublagen-Diagramm zeigt, und
Fig. 6 eine schematische Ansicht einer Wälzstoßmaschine mit ihren NC-Maschinenachsen zeigt.

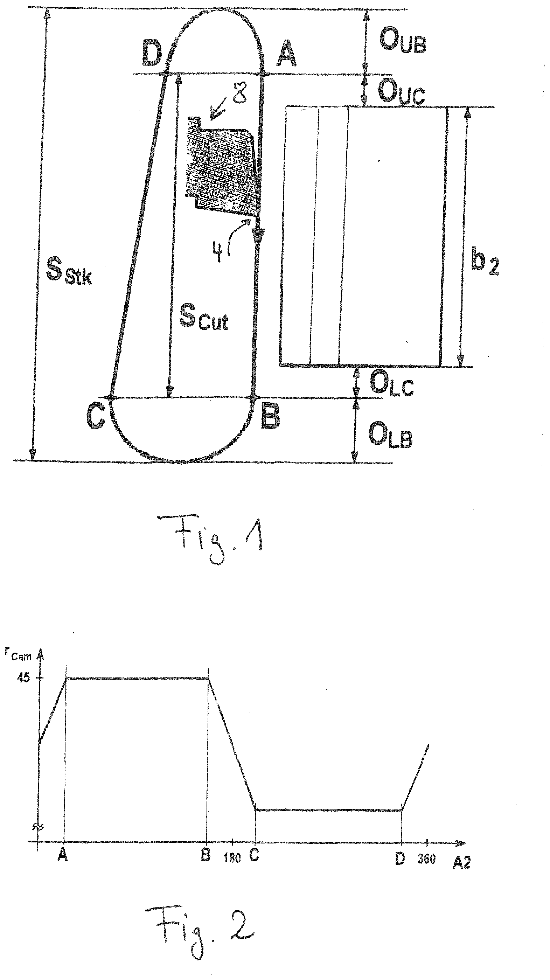

In Fig. 1 ist die Werkzeugbahn beim Stoßhub in einer beispielhaften Ausführungsform der Erfindung gezeigt, in welchem ein Stoßkopf mit Kurbelantrieb herangezogen und die Abhebebewegung über einen Abhebenocken erzeugt wird, wobei die Bewegung des Abhebenockens mit der der Hubspindel gekoppelt ist. Die Werkzeugbahn ist in einer Projektion auf die von der Hubrichtung und der Abheberichtung aufgespannten Ebene dargestellt und stellt, genauer gesagt, die Bahn dar, die die Spitze 4 eines arbeitenden Zahns eines Stoßrads 8 während eines gesamten Hubes zurücklegt.

Die Werkzeugbahn durchläuft vier Abschnitte A-B, B-C, C-D und D-A, wobei das Werkzeug im Arbeitshub A-B an die wälzgestoßene Verzahnung 2 angestellt ist. Im Bereich der unteren Abhebung (B-C) wird das Werkzeug auf die Abhebeposition zurückgezogen, in der oberen Abhebung (D-A) wieder rückgestellt oder angestellt. Der Rückhub (C-D) findet im abgehobenen Zustand des Werkzeugs statt.

Der durch den Abhebebereich des Nockens bedingte Überlaufweg des Stoßhubs oberhalb und unterhalb der Verzahnung ist in Fig. 1 mit O_{UB} und O_{LB} bezeichnet, ein zusätzlicher stoßwerkzeugabhängiger Überlaufweg, der bei dem Stoßen von Schrägverzahnungen mit im Treppenschliff geschliffenen Schneidrädern durch den Spanfreiwinkel bedingt ist, ist in Fig.1 mit O_{LC} und O_{LB} angegeben. Damit ist die sogenannte Schnittlänge S_{Cut} die Summe aus der Verzahnungsbreite b₂ der Werkstückverzahnung 2 plus dem oberen und unteren Überlauf des Stoßrads 8, wohingegen die axiale Länge der Abhebebewegung B-C durch den Überlauf der Abhebung unten und die axiale Ausdehnung der Rückstellbewegung durch den Überlauf der Abhebung oben gegeben ist, wie aus Fig. 1 hervorgeht. Die gesamte Hublänge Sₛₜₖ ist, wie aus Fig. 1 erkennbar, die Summe der oberen und unteren Überläufe der Abhebung und der Schnittlänge S_{Cut}.

In Fig. 2 ist das zur Werkzeugbahn von Fig. 1 zugehörige Profil des Abhebenockens schematisch dargestellt (tatsächlich sind die Übergänge bei A, B, C und D für eine ruckfreie Bewegung ausgelegt). Man erkennt einen konstanten Radius des Abhebenockens r_{cam} im Schnittbereich und einen ebenfalls konstanten Bereich, jedoch mit geringerem Radius im Rückhubbereich. Der Rückhub ist jedoch nicht auf geradlinige Bewegungen eingeschränkt.

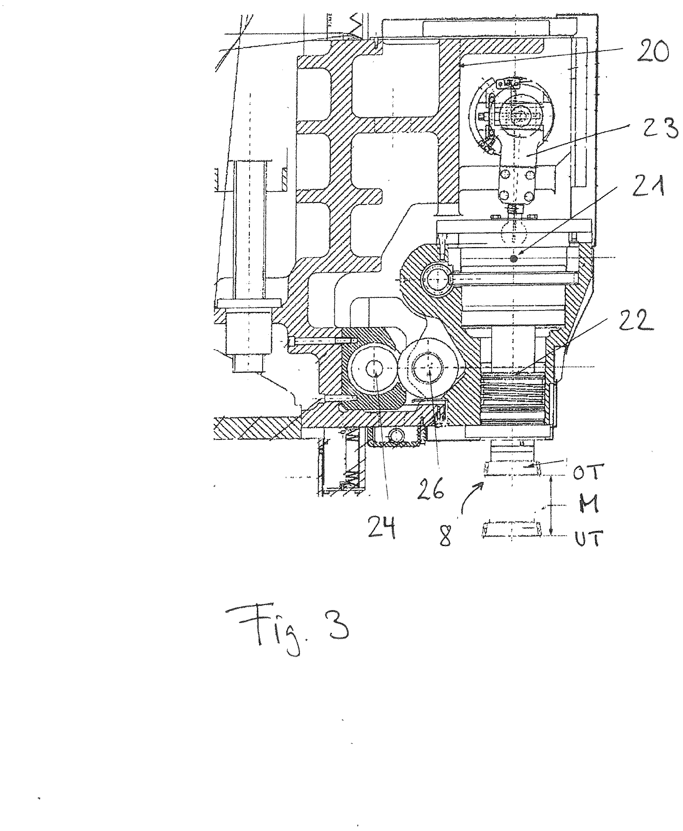

Die Werkzeugbahn im Rückhubbereich C-D verläuft in Fig. 1 in diesem Ausführungsbeispiel nicht parallel zum Arbeitshub, sondern schräg, da die Abhebung bei einem Stoßkopf mit Kurbeltrieb über eine Kippbewegung der Spindelführung erfolgt. Dies ist besser in Fig. 3 zu erkennen, die einen Stoßkopf zeigt. In Fig. 3 ist das Grundgestell des Stoßkopfes mit 20 bezeichnet, der Pleuel mit 23, der Drehpunkt mit 21 und die Spindelführung mit 22. Die Spindelführung wird durch den Abhebenocken 24 in Kontakt mit Andrückrolle 26 beim Schnitt nach vorne gedrückt und während des Rückhubs nach hinten zurückgelassen. Durch diese Verkippung ist der Abhebebetrag des Werkzeugs abhängig von der Hublage, und das Verhältnis des Abhebebetrags am Schneidrad zur Abhebung am Nocken ist gleich dem Verhältnis aus der Differenz aus dem Abstand der Hubmitte M zwischen oberem Totpunkt OT und unterem Totpunkt UT. und der Hublage relativ zur Hubmitte und dem axialen Abstand der Drehmitte des Abhebenockens zum Drehpunkt 21. Auf diese Weise lässt sich der Abhebebetrag durch die gewählte Bauart des Stoßkopfes beeinflussen.

Die bislang erläuterten Beispiele kommen vornehmlich bei der Bearbeitung von Außenverzahnungen zum Einsatz, die Erfindung betrifft jedoch ebenfalls die Bearbeitung von Innenverzahnungen. Hierfür wird, wie dem Fachmann bekannt ist, im Falle einer Bearbeitung der Innenverzahnung auf der dem Hauptständer zugewandten Seite ein Innennocken herangezogen, bei dem die Abhebung entgegengesetzt zum oben beschriebenen Abhebenocken erfolgt. Alternativ könnte jedoch die Innenverzahnung auch auf der dem Hauptständer gegenüberliegenden Seite bearbeitet werden, so dass die gleichen Verhältnisse wie bei der Außenverzahnung herrschen. Ebenfalls möglich ist bei dem Stoßen an der Innenverzahnung mit einem Außenabhebenocken auf der dem Hauptständer zugewandten Seite eine Umkehr der Kopplung zwischen Hubspindel und Abhebenockendrehachse, so dass der Schnitt im Rückhubbereich des Abhebenockens stattfindet.

Obgleich bislang auf den Abhebenocken bei Stoßkopf mit Kurbeltrieb abgestellt wurde, ist die Erfindung auch für andersgeartete Stoßköpfe wie etwa hydraulische Stoßköpfe anwendbar, bei der der gesamte Hauptständer zur Abhebung radial zurückgezogen wird und somit der Abhebebetrag frei wählbar ist.

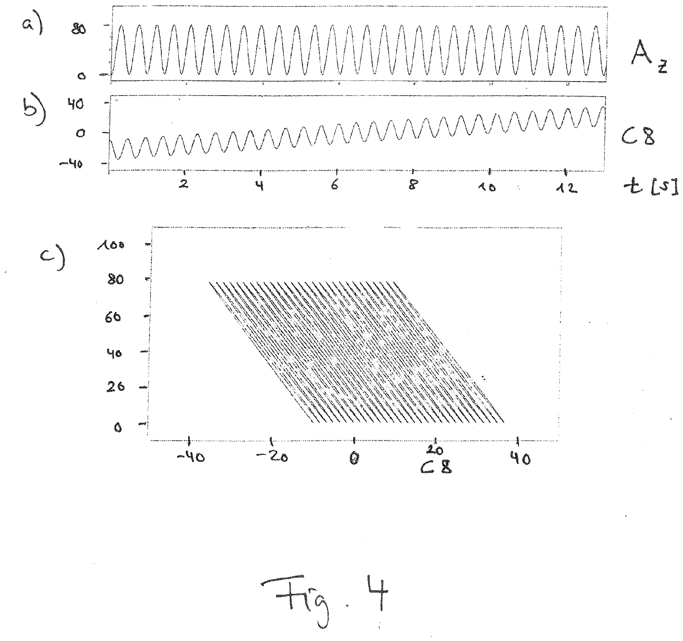

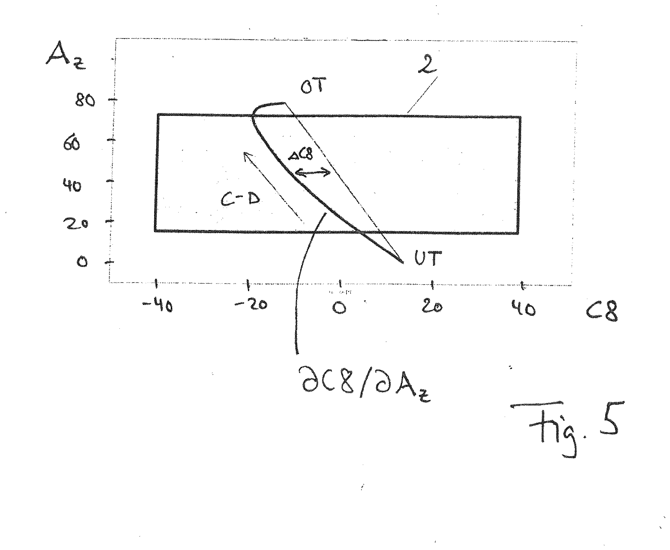

Nachstehend wird nun in einer beispielhaften Ausführungsform anhand der Figuren 4 und 5 die überlagerte Ausweichbewegung dargestellt, die in diesem Ausführungsbeispiel durch eine Zusatzdrehung δC8 des Stoßwerkzeugs 8 abhängig von einer Hublagenänderung δA_{Z} im Rückhub C-D realisiert ist.

Hierzu ist in Fig. 4a isoliert dargestellt die Hubbewegung A_{Z} als Funktion der Zeit, entsprechend der Axialprojektion der fortlaufend durchlaufenen Werkzeugbahn aus Fig. 1. Man erkennt die sich zyklisch wiederholenden Stoßhübe. In Fig. 4b darunter ist die Drehposition C8 des Stoßrads aufgezeichnet, etwa durch einen Drehgeber bestimmt, die in Wälzkopplung erfolgt. Die in Fig. 4b dargestellte Kurve ergibt sich aus einer Überlagerung eines linearen Anstiegs, die die einer Wälzkopplung bei angenommener Gradverzahnung und somit die Kopplung der Werkzeugdrehung an die im Vergleich zur Frequenz der Stoßhübe langsame (mehrere Hübe pro Teilung) Werkstückdrehung wiedergibt und die von der elektronischen Schräge überlagert ist wie eingangs erläutert. Dies kommt in den an die Frequenz der Hubachse angepassten Schwingungsanteile in Fig. 4b zum Ausdruck. Im Arbeitshub A-B wird die Schräge durch Nachführen der Werkzeugdrehung ausgeglichen, im Rückhub C-D ist dies wieder umzukehren, um beim nächsten Arbeitshub wieder in der korrekten Wälzkopplung zu sein.

In Fig. 4c sind Hubbewegung und Drehposition gegeneinander aufgetragen. Ohne den linearen Anteil der Wälzkopplung aus Fig. 4b ergäbe sich lediglich eine einzige Linie, die im Rückhub und Rückhub entgegengesetzt durchlaufen werden würde, aufgrund des linearen Anteils der Wälzkopplung aus Fig. 4b ergibt sich die in 4c dargestellte Beziehung, bei der die Strecke gezerrt wird und aufgrund der Verzerrung durch Änderung der C8-Position für aufeinanderfolgende Hübe ziehharmonikaartig auseinanderläuft.

Die dieser dargestellten Bewegung nochmals überlagerte Zusatzbetrag ΔC8 ist im Vergleich zur elektronischen Schräge so gering, dass sie in Fig. 4 nicht erkennbar ist und daher in Fig. 5 für einen einzigen Rückhub stark überhöht dargestellt ist (tatsächlich entsprechen für typische Anwendungen größenordnungsmäßig eine 30 µm Änderung am Teilkreis des Werkzeugs 8 einem Drehlagenunterschied von 0,02° in der C8-Achse). In Fig. 5 bezeichnet die gerade Linie UT-OT die Beziehung zwischen Hub und Werkzeugdrehung im Rückhub, und die stark überhöht dargestellte davon abweichende gekrümmte Bahn die sich gegenüber der Geraden durch die Zusatzdrehung in Abhängigkeit der Hubbewegung, SC8/8A_{Z}, ändernde Drehposition. Man erkennt, dass im Bereich des Rückhubs sich bei gleicher Hubbewegungsposition die Drehlage bezüglich der geraden Bahn stetig erhöhend ändert, bis nahe der oberen Werkstückkante ein Maximum erreicht wird und im Bereich des oberen Überlaufs durch Umkehrung der Zusatzdrehung der vorherig durch die Zusatzdrehung erzeugte Offset wieder auf Null gestellt wird.

Wie insbesondere aus Fig. 5 erkennbar ist, baut sich dieser zusätzliche Drehwinkel-Offset erst langsam im Rückhub auf, so dass im Bereich der unteren Werkstückkante jedenfalls ein geringerer Offset als im Bereich der oberen Werkstückkante erzeugt wird. Auf diese Weise weicht man im Rückhub der einlaufenden Flanke der Werkstückverzahnung aus, jedoch nicht schlagartig auf die maximale Ausweichposition, so dass ein Kollisionsabstand auch zur Gegenflanke insbesondere im Bereich nahe der unteren Zahnkante der Werkstückverzahnung 2 gering bleibt. Dies ermöglicht, wie oben bereits erläutert, eine Auslegung auf insgesamt geringere (radiale) Abhebebeträge, also einen geringeren Abstand der Arbeitshub- und Rückhubbahnen in Fig. 1, und somit Gestaltungsmöglichkeiten zur schwingungsärmeren Auslegung von Wälzstoßmaschinen.

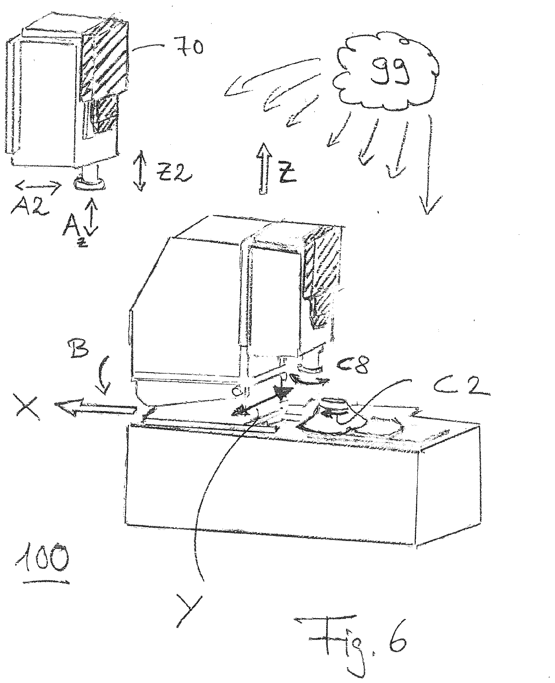

Die Maschinenachsen einer hierzu einsetzbaren Wälzstoßmaschine sind nochmals anhand von Fig. 6 für eine beispielhafte Wälzstoßmaschine 100 mit Steuereinheit 99 zur CNC-Steuerung der Maschinenachsen der Wälzstoßmaschine 100.

Die in Fig. 6 dargestellten Standard-NC-Achsen der Wälzstoßmaschine 100 sind die zur Zustellung herangezogene Radialachse X, die Achse Z für die Hublage, die Achse C für die Werkstückdrehung, die Achse C2 für die Werkzeugdrehung, die Achse A_{Z} für die Hubbewegung der Stoßspindel, und die Achse A2 für die Nockendrehung/Abhebung für den Fall einer bevorzugten Ausführungsform der Wälzstoßmaschine 100 mit Abhebenocken. Des Weiteren können einzeln oder in Kombination noch zusätzliche NC-Achsen vorgesehen werden, wie die Achse Z2 für die Hublängeneinstellung, eine Achse B für eine einstellbare Ständerneigung und eine Tangentialachse Y für einen Ständerseitenversatz, um auch außermittige Wälzstoßbearbeitungen durchführen zu können. Ebenfalls dargestellt am Stoßkopf ist der Direktantrieb 70 der Drehachse C8.

Im Übrigen ist die Erfindung nicht auf die anhand der Figuren dargestellten Ausführungsbeispiele eingeschränkt.

## Patentansprüche

1. Verfahren zum Wälzstoßen einer periodischen Struktur, insbesondere einer Verzahnung (2) an einem Werkstück, bei dem das Werkstück kontinuierlich um seine Drehachse (C2) drehend in materialabnehmenden Bearbeitungseingriff mit einem verzahnten, sich in Wälzkopplung zur Werkstückdrehung um seine Drehachse (C8) drehenden Stoßwerkzeug (8) gebracht wird, und das Stoßwerkzeug nach einem Arbeitshub (A-B) von dem Werkstück in einer Abheberichtung (A2) abgehoben (B-C) und nach anschließendem Rückhub (C-D) in abgehobenem Zustand für den nächsten Arbeitshub wieder zum Werkstück rückgestellt (D-A) wird,
**dadurch gekennzeichnet, dass** man der Wälzkopplung im Rückhub (C-D) eine quer zur Abheberichtung (A2) verlaufende Ausweichbewegung (δC8/δA_{Z}) des Stoßwerkzeugs weg von der einlaufenden Flanke des Werkstücks überlagert.

2. Verfahren nach Anspruch 1, bei dem die Ausweichbewegung durch eine Zusatzdrehung des Stoßwerkzeugs bewirkt wird.

3. Verfahren nach Anspruch 1 oder 2, bei dem die Ausweichbewegung über einen überwiegenden Teil des Rückhubs (C-D) vorgenommen wird.

4. Verfahren nach einem der vorhergehenden Ansprüche, bei dem die Ausweichbewegung zu einem sich im Rückhub stetig aufbauenden Offset, insbesondere Drehwinkel-Offset (ΔC8) einer Referenz der Werkzeugverzahnung gegenüber der Wälzkopplung gesteuert wird.

5. Verfahren nach Anspruch 4, bei dem der maximale Offset mehr am Ende (D) als am Anfang (C) des Rückhubs liegt.

6. Verfahren nach einem der vorhergehenden Ansprüche, bei dem die Ausweichbewegung zu einem im Intervall [1/8; 8], bevorzugt im Intervall [1/5; 5], insbesondere im Intervall [1/3; 3] liegenden Verhältnis des engsten Abstands zwischen Werkstückverzahnung (2) und Stoßwerkzeug (8) an der einlaufenden Werkstückflanke zu dem an der gegenüberliegenden Werkstückflanke steuert.

7. Verfahren nach einem der vorhergehenden Ansprüche, bei dem der Abhebebetrag geringer eingestellt wird als eine erste Abhebereferenz, bei deren Einstellung das Stoßwerkzeug ohne die Ausweichbewegung außerhalb eines Sicherheitsabstands für Rückhubstreifen liegen würde.

8. Verfahren nach einem der vorhergehenden Ansprüche, bei dem die Abhebebewegung (A2) und die Ausweichbewegung (δC8/δA_{Z}) aufeinander hinsichtlich einer Minimierung des Abhebebetrags abgestimmt werden.

9. Verfahren nach einem der vorhergehenden Ansprüche, bei dem eine Änderung der Abhebekomponente zur Axialkomponente der Werkzeugbahn krümmungsruckfrei erfolgt.

10. Verfahren nach einem der vorhergehenden Ansprüche, bei dem pro Teilung der Werkstückverzahnung (2) mehrere Hübe ausgeführt werden.

11. Verfahren nach einem der vorhergehenden Ansprüche, bei dem der Rückhub gegenüber dem Arbeitshub beschleunigt wird.

12. Verfahren nach einem der vorhergehenden Ansprüche, bei dem die Rückstellbewegung verzögert wird.

13. Verfahren nach einem der vorhergehenden Ansprüche, bei dem im Falle einer Kollisionsgefahr bereits beim Abheben die effektive Abheberichtung durch eine quer zur die Abhebung bewirkende Maschinenachsrichtung verlaufende Überlagerungsbewegung und/oder eine außermittige Bearbeitung geändert wird.

14. Verfahren nach einem der vorhergehenden Ansprüche, bei dem die Werkzeugbahn (A-B-C-D) über einen Abhebenocken (24) bei einem Stoßkopf mit Kurbeltrieb mitbestimmt wird.

15. Steuerprogramm, das, wenn auf einer Steuereinrichtung (99) einer Wälzstoßmaschine (100) ausgeführt, diese zur Ausführung eines Verfahrens nach einem der Ansprüche 1 bis 14 steuert.

16. Wälzstoßmaschine (100), insbesondere mit Abhebenocken (24) bei einem Stoßkopf mit Kurbeltrieb, mit einer Steuereinrichtung (99), die die Wälzstoßmaschine in wenigstens einer Betriebsart zur Ausführung eines Verfahrens nach einem der Ansprüche 1 bis 14 steuert.

## Claims

1. A method for gear shaping a periodic structure, in particular a toothing (2) on a workpiece, wherein the workpiece, continuously rotating around its axis of rotation (C2), is brought into material-removing machining engagement with a toothed shaping tool (8), which rotates around its axis of rotation (C8) in rolling contact with the workpiece rotation, and, after a working stroke (A-B), the shaping tool is lifted off (B-C) from the workpiece in a lifting direction (A2) and, after a subsequent return stroke (C-D), the shaping tool in the lifted state is reset (D-A) to the workpiece again for the next working stroke,
**characterised in that** a deflection movement (δC8/δA_{z}) of the shaping tool running transversely to the lifting direction (A2) away from the incoming flank of the workpiece is superimposed on the rolling contact in the return stroke (C-D).

2. The method according to claim 1, wherein the deflection movement is brought about by an additional rotation of the shaping tool.

3. The method according to claim 1 or 2, wherein the deflection movement is performed over a predominant part of the return stroke (C-D).

4. The method according to one of the preceding claims, wherein the deflection movement is controlled with regard to an offset that gradually builds up in the return stroke, in particular a rotation angle offset (ΔC8) of a reference of the tool toothing with respect to the rolling contact.

5. The method according to claim 4, wherein the maximum offset lies more at the end (D) than at the beginning (C) of the return stroke.

6. The method according to one of the preceding claims, wherein the deflection movement controls with regard to a ratio of the closest distance between the workpiece toothing (2) and the shaping tool (8) on the incoming workpiece flank relative to the same distance on the opposite workpiece flank, which ratio is in the interval [1/8; 8], preferably in the interval [1/5; 5], in particular in the interval [1/3; 3].

7. The method according to one of the preceding claims, wherein the lifting amount is set lower than a first lifting reference, during the setting of which the shaping tool would lie outside a safety distance for avoiding collisions during the return stroke in the absence of a deflection movement.

8. The method according to one of the preceding claims, wherein the lifting movement (A2) and the deflection movement (δC8/δA_{z}) are coordinated with each another with regard to minimising the lifting amount.

9. The method according to one of the preceding claims, wherein a change in the lifting component into the axial component of the tool path takes place free from any curvature jerks.

10. The method according to one of the preceding claims, wherein several strokes are carried out for each pitch of the workpiece toothing (2).

11. The method according to one of the preceding claims, wherein the return stroke is accelerated compared to the working stroke.

12. The method according to one of the preceding claims, wherein the reset movement is delayed.

13. The method according to one of the preceding claims, wherein, in the event of a risk of collision already during lifting, the effective lifting direction is changed by means of a superimposition movement running transversely to the machine axis direction effecting the lifting and/or by means of excentric machining.

14. The method according to one of the preceding claims, wherein the tool path (A-B-C-D) is also determined by means of a lifting cam (24) in the case of a shaping head with a crank drive.

15. A control program, which, when executed on a controller (99) of a gear shaping machine (100), controls said gear shaping machine to carry out a method according to one of claims 1 to 14.

16. A gear shaping machine (100), in particular with lifting cams (24) in a shaping head with a crank drive, comprising a controller (99) which controls the gear shaping machine in at least one operating mode for carrying out a method according to one of claims 1 to 14.

## Revendications

1. Procédé de mortaisage par génération d'une structure périodique, en particulier une denture (2) sur une pièce, dans lequel la pièce tournant en continu sur son axe de rotation (C2) est amenée en prise d'usinage par enlèvement de matière avec un outil de mortaisage (8) denté, tournant sur son axe de rotation (C8) en accouplement en roulement pour faire tourner la pièce, et après une course de travail (A-B) l'outil de mortaisage est soulevé (B-C) de la pièce dans une direction de soulèvement (A2) et, après une course de retour (C-D) subséquente, est repositionné (D-A) à l'état soulevé vers la pièce en vue de la course de travail suivante,
**caractérisé en ce qu'**on superpose à l'accouplement en roulement, lors de la course de retour (C-D), un mouvement de déviation (δC8/δA_{z}) de l'outil de mortaisage transversal à la direction de soulèvement (A2) et s'éloignant du flanc entrant de la pièce.

2. Procédé selon la revendication 1, dans lequel le mouvement de déviation est provoqué par une rotation supplémentaire de l'outil de mortaisage.

3. Procédé selon la revendication 1 ou 2, dans lequel le mouvement de déviation s'effectue sur une partie prédominante de la course de retour (C-D).

4. Procédé selon l'une quelconque des revendications précédentes, dans lequel le mouvement de déviation est commandé en vue d'un décalage - à accumulation constante lors de la course de retour, notamment un décalage d'angle de rotation (ΔC8) - d'une référence de la denture de l'outil par rapport à l'accouplement en roulement.

5. Procédé selon la revendication 4, dans lequel le décalage maximum est plus présent à la fin (D) qu'au début (C) de la course de retour.

6. Procédé selon l'une des revendications précédentes, dans lequel le mouvement de déviation commande en vue d'un rapport entre la distance la plus faible existant entre la denture de la pièce (2) et l'outil de façonnage (8) sur le flanc entrant de la pièce et celle existant sur le flanc opposé de la pièce qui soit situé dans l'intervalle [1/8 ; 8], de préférence dans l'intervalle [1/5 ; 5], et notamment dans l'intervalle [1/3 ; 3].

7. Procédé selon l'une quelconque des revendications précédentes, dans lequel la quantité de soulèvement est réglée pour être inférieure à une première référence de soulèvement réglée de telle manière que l'outil de mortaisage, sans mouvement de déviation, se situerait au-delà d'une distance de sécurité évitant les collisions lors de la course de retour.

8. Procédé selon l'une des revendications précédentes, dans lequel le mouvement de soulèvement (A2) et le mouvement de déviation (δC8/δA_{z}) sont coordonnés l'un à l'autre en vue de minimaliser la quantité de soulèvement.

9. Procédé selon l'une quelconque des revendications précédentes, dans lequel un changement de la composante de soulèvement en composante axiale de la trajectoire de l'outil se produit sans à-coups de courbure.

10. Procédé selon l'une des revendications précédentes, dans lequel plusieurs courses sont effectuées pour chaque pas de la denture (2) de la pièce.

11. Procédé selon l'une des revendications précédentes, dans lequel la course de retour est accélérée par rapport à la course de travail.

12. Procédé selon l'une des revendications précédentes, dans lequel le mouvement de repositionnement est retardé.

13. Procédé selon l'une quelconque des revendications précédentes, dans lequel, en cas de risque de collision dans le cadre même du soulèvement, la direction effective de soulèvement est modifiée par un mouvement de superposition transversal à la direction de l'axe machine provoquant le soulèvement et/ou par un usinage décentré.

14. Procédé selon l'une quelconque des revendications précédentes, dans lequel la trajectoire de l'outil (A-B-C-D) est codéterminée par l'intermédiaire d'une came de soulèvement (24) lors de l'utilisation d'une tête de mortaisage à mécanisme d'embiellage.

15. Programme de commande qui, lorsqu'il est exécuté sur un dispositif de commande (99) d'une machine à mortaiser par génération (100), commande celle-ci en vue de l'exécution d'un procédé selon l'une des revendications 1 à 14.

16. Machine à mortaiser par génération (100), dotée notamment de cames de soulèvement (24) lors de l'utilisation d'une tête de mortaisage à mécanisme d'embiellage, et comportant un dispositif de commande (99) qui commande la machine sous au moins un mode de fonctionnement en vue de l'exécution d'un procédé selon l'une des revendications 1 à 14.
